# FASCICULE DE BREVET EUROPEEN

(11) **EP 1 360 099 B1**
(45) Date de publication et mention de la délivrance du brevet: **24.03.2010**
(21) Numéro de dépôt: 02701322.6
(22) Date de dépôt: 25.01.2002
(51) Int. Cl.: B60T 11/236, B60T 11/16

(54) **MA TRE-CYLINDRE COMPORTANT DES RAINURES DE REALIMENTATION**
HAUPTZYLINDER MIT ERHOLUNGSRILLEN
MASTER CYLINDER COMPRISING REPLENISHING GROOVES

(30) Priorité: 08.02.2001 FR 0101895
(43) Date de publication de la demande: 12.11.2003
(73) Titulaire: BOSCH SISTEMAS DE FRENADO, S.L., 08080 Barcelona 6 (ES)
(72) Inventeur: BERTHOMIEU, Bruno, BARCELONE (ES); SIMON BACARDIT, Juan, 08013 BARCELONE (ES); SACRISTAN, Fernando, 08348 BARCELONE (ES)
(74) Mandataire: Hurwic, Aleksander Wiktor
(86) Numéro de dépôt international: PCT/FR2002/000320
(87) Numéro de publication internationale: WO 2002/062642

(56) Documents cités:
- US-A- 4 429 531
- US-A- 4 866 938
- US-A- 5 251 446
- US-A- 5 732 557
- US-A- 5 953 916

## Description

L'invention concerne un maître-cylindre de freinage pour un véhicule automobile.

L'invention concerne plus particulièrement un maître-cylindre de freinage pour un véhicule automobile, du type qui comporte un corps sensiblement axial à l'intérieur d'un alésage duquel est monté coulissant au moins un piston axial, qui est susceptible d'être actionné par un conducteur du véhicule entre une position arrière de repos et une position avant d'application d'un effort de freinage, du type dans lequel l'alésage comporte deux moyens d'étanchéité avant et arrière qui sont interposés entre le piston et l'alésage, le moyen d'étanchéité avant délimitant dans l'alésage une chambre d'alimentation arrière et une chambre de pression avant, du type dans lequel le corps comporte un conduit radial d'alimentation qui relie un réservoir extérieur de fluide hydraulique à la chambre d'alimentation arrière et qui débouche entre les deux moyens d'étanchéité du type dans lequel le corps comporte un perçage d'alimentation d'un circuit de freinage qui débouche dans la chambre de pression avant, du type qui comporte des moyens de mise en communication de la chambre de pression avant et de la chambre d'alimentation arrière qui sont susceptibles d'être inhibés par le piston lorsqu'il est mû axialement vers l'avant vers sa position d'application pour isoler la chambre de pression avant de la chambre d'alimentation arrière et permettre ainsi l'établissement d'une pression de freinage dans la chambre de pression avant, du type dans lequel le moyen d'étanchéité avant est susceptible de permettre le passage du fluide hydraulique lors du recul du piston vers sa position de repos.

On connaît de nombreux exemples de maître-cylindre de freinage de ce type.

Dans la plupart des maîtres cylindres de ce type, le piston est monté coulissant directement dans l'alésage et au moins un des deux moyens d'étanchéité, formé d'un joint d'étanchéité, est porté par le piston.

Cette conception présente de nombreux inconvénients.

En premier lieu, le piston devant guidé sur quasiment toute sa longueur dans l'alésage, il est nécessaire, lors de la réalisation des usinages de l'alésage du corps et du piston, de réaliser un ajustement du piston dans l'alésage qui détermine à la fois un guidage satisfaisant du piston dans l'alésage, une étanchéité correcte du moyen d'étanchéité, et l'existence d'un jeu qui soit suffisant pour permettre au fluide hydraulique provenant de la chambre de pression avant, lors du recul du piston vers sa position de repos, de s'insinuer entre le piston et l'alésage afin de déformer la lèvre du joint d'étanchéité pour ré-alimenter le conduit radial et le réservoir. US 4 429 531 decrit un maître-cylindre conventionel.

La réalisation de tels usinages est par conséquent très coûteuse, et d'autre part elle ne garantit pas une circulation efficace du fluide hydraulique.

Pour remédier à cet inconvénient, l'invention propose un maître-cylindre de freinage du type décrit précédemment qui comporte des moyens de circulation du fluide entre la chambre et le conduit radial dont l'efficacité est indépendante des tolérances d'usinage du corps et du piston.

Dans ce but, l'invention propose un maître-cylindre de freinage du type décrit précédemment, caractérisé en ce l'alésage comporte un tronçon avant de guidage du piston, agencé en avant du moyen d'étanchéité avant, qui comporte au moins une rainure qui établit une communication entre la chambre avant et le moyen d'étanchéité avant pour permettre, lors du recul du piston vers sa position de repos, la réalimentation du conduit radial d'alimentation et du réservoir.

Selon d'autres caractéristiques de l'invention:
- l'alésage comporte au moins un tronçon arrière de guidage du piston, qui est agencé entre le moyen d'étanchéité avant et le conduit radial d'alimentation, et qui comporte au moins une rainure qui établit une communication entre le moyen d'étanchéité avant et le conduit radial pour permettre, lors du recul du piston vers sa position de repos, la réalimentation du conduit radial d'alimentation et du réservoir.
- les rainures sont hélicoïdales,
- chaque tronçon avant et/ou arrière comporte une pluralité de rainures,
- les tronçons avant et arrière de guidage sont respectivement constitués de portées annulaires avant et arrière qui font saillie à l'intérieur de l'alésage et qui sont chacune d'un diamètre intérieur correspondant sensiblement à celui du piston,
- le moyen d'étanchéité avant est constitué d'un joint d'étanchéité avant qui est monté dans une gorge du corps et dont une lèvre périphérique intérieure, agencée au contact du piston, est susceptible de se soulever du piston lorsqu'il revient de sa position d'application vers sa position de repos pour permettre au fluide hydraulique, en circulant entre l'alésage le piston de ré-alimenter le conduit radial d'alimentation et le réservoir,
- le piston comporte à son extrémité un anneau élastique extérieur qui est susceptible, dans la position de repos du piston, de venir au contact d'une face d'épaulement avant de la portée annulaire avant pour former butée,
- le piston est rappelé élastiquement vers sa position arrière de repos par un ressort, et
- le maître-cylindre est un maître-cylindre de type "tandem" qui comporte, d'arrière en avant, deux pistons primaire et secondaire qui délimitent dans l'alésage du corps des chambres d'alimentation primaire et secondaire et des chambres de pression primaire et secondaire, le piston primaire étant rappelé élastiquement vers sa position arrière de repos par l'intermédiaire d'un ressort prenant appui entre une face arrière du piston secondaire et une face avant du piston primaire.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'un maître-cylindre de type "tandem" selon l'invention représenté en position de repos ;
- la figure 2 est une demi-vue en perspective du corps du maitre-cylindre ;
- la figure 3 est une vue de détail des rainures selon un mode de réalisation préféré de l'invention ; et
- la figure 4 est une vue de détail des rainures selon un mode de réalisation en variante de l'invention.

Dans la description qui va suivre, des chiffres de référence identiques désignent des pièces identiques ou ayant des fonctions similaires.

Par convention, les termes "avant" et "arrière", désignent respectivement des éléments ou des positions orientés respectivement vers la gauche et la droite des figures.

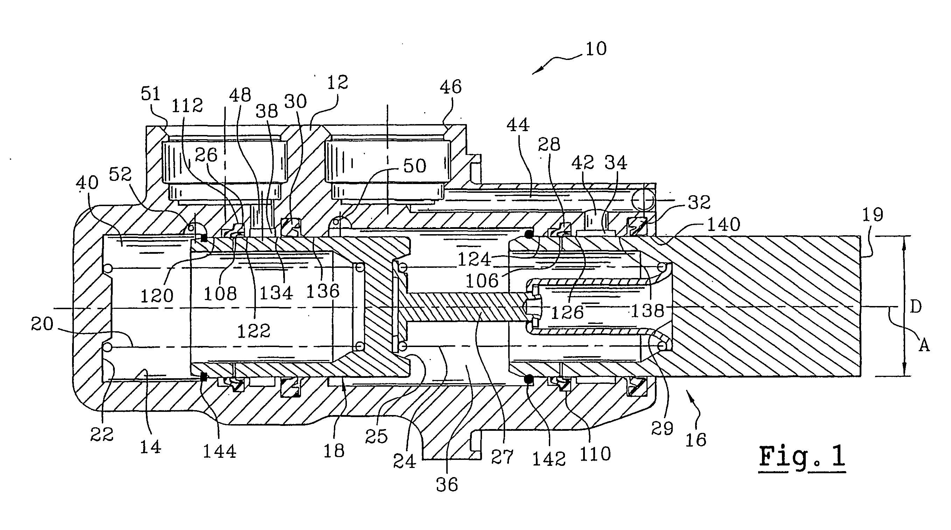

On a représenté sur la figure 1 l'ensemble d'un maître-cylindre 10 de freinage pour un véhicule automobile.

De manière connue; dans le mode de réalisation préféré de l'invention, le maître-cylindre 10 est un maître-cylindre de type "tandem" qui comporte un corps 12 sensiblement axial d'axe A à l'intérieur d'un alésage 14 duquel sont montés coulissants deux pistons axiaux 16 et 18.

Cette configuration n'est toutefois pas limitative de l'invention et le maître-cylindre 10 pourrait être un maître-cylindre simple ne comportant qu'un seul piston coulissant.

Le piston 16, dit piston primaire 16, est destiné à permettre l'établissement d'une pression hydraulique dans un circuit primaire de freinage du véhicule (non représenté), et le piston 18, dit piston secondaire 18, est destiné à permettre l'établissement d'une pression hydraulique dans un circuit secondaire de freinage du véhicule (non représenté) qui est indépendant du circuit primaire de freinage du véhicule.

Le piston primaire 16 est susceptible d'être actionné directement par un conducteur du véhicule. Par exemple, une extrémité arrière 19 du piston primaire 16 est susceptible d'être reliée à un servomoteur (non représenté) qui amplifie les efforts exercés sur une pédale de freinage du véhicule.

Le piston secondaire 18 est susceptible d'être actionné indirectement par le conducteur du véhicule, notamment par le piston primaire 16 d'une façon qui sera décrite plus en détail ultérieurement.

Chaque piston primaire 16 ou secondaire 18 est ainsi mobile entre une position arrière de repos, dans laquelle les pistons 16, 18 occupent une position vers la droite de la figure 1, et une position avant d'application d'un effort de freinage (vers la - gauche de la figure 1, non représentée) dans laquelle ils coulissent dans l'alésage 14.

De manière connue, chaque piston primaire 16 ou secondaire 18 est rappelé élastiquement vers sa position arrière de repos à l'encontre d'une butée qui est formée dans le corps 14 et qui sera décrite ultérieurement.

En particulier, le piston secondaire 18 est rappelé vers l'arrière par un ressort 20 qui prend appui sur une face 22 transversale d'extrémité avant de l'alésage 14 et sur le piston secondaire 18, et le piston primaire 16 est rappelé élastiquement vers l'arrière par un ressort 24 qui prend appui entre une face 25 transversale arrière du piston secondaire 18 et une face avant 29 du piston primaire 16. Plus particulièrement, le ressort 24 étant notamment de grande longueur, il est monté autour d'un vérin coulissant 27 qui est interposé entre la face 25 transversale arrière du piston secondaire 18 et le piston primaire 16.

L'alésage 14 comporte deux moyens primaires d'étanchéité avant 28 et arrière 32 qui sont interposés respectivement entre le piston primaire 16 et l'alésage 14 et deux moyens secondaires d'étanchéité avant 26 et arrière 30 qui sont interposés respectivement entre le piston secondaire 18 et l'alésage 14.

De ce fait, le moyen primaire d'étanchéité avant 28 délimite dans l'alésage 14 une chambre 34 d'alimentation arrière et une chambre 36 de pression avant. De mêle, le moyen secondaire d'étanchéité avant 28 délimite dans l'alésage 14 une chambre 38 d'alimentation arrière et une chambre 40 de pression avant

Le corps 12 comporte un conduit 42 primaire radial d'alimentation qui relie un réservoir extérieur primaire (non représenté) de fluide hydraulique à la chambre d'alimentation primaire arrière 34 et qui débouche entre les deux moyens primaires d'étanchéité 28 et 32.

En particulier, le conduit 42 primaire radial est par exemple relié par l'intermédiaire d'un conduit longitudinal intermédiaire 44 à un orifice 46 qui débouche à l'extérieur du corps 12 et qui est destiné à recevoir une bouche de sortie (non représentée) du réservoir primaire associé.

D'une manière analogue, le corps 12 comporte un conduit 48 secondaire radial d'alimentation qui débouche entre les deux moyens secondaires d'étanchéité 26 et 30, c'est à dire dans la chambre d'alimentation secondaire arrière 38, et qui débouche à l'extérieur du corps 12 par l'intermédiaire d'un orifice 51 destiné à recevoir une bouche de sortie (non représentée) d'un réservoir secondaire associé.

Le corps comporte deux perçages primaire 50 et secondaire 52 d'alimentation des circuits de freinage primaire et secondaires associés qui débouchent dans les chambres avant de pression primaire 36 et secondaire 40 associées.

De manière connue, le maître-cylindre 10 comporte des moyens de mise en communication de chaque chambre avant de pression primaire 36 et secondaire 40 avec la chambre arrière d'alimentation primaire 34 et secondaire 38 associée. Ces moyens de mise en communication sont susceptibles d'être inhibés par le piston primaire 16 et secondaire 18 associé lorsqu'il est mû axialement vers l'avant vers sa position d'application pour isoler la chambre avant de pression primaire 36 ou secondaire 40 de la chambre arrière d'alimentation primaire 34 ou secondaire 38 associée, et permettre ainsi l'établissement d'une pression de freinage dans la chambre avant de pression primaire 36 ou secondaire 40 associée.

Selon un mode de réalisation préféré mais non limitatif de l'invention, chaque piston 16, 18 est monobloc et notamment tubulaire. Pour former les moyens de communication, chaque piston 16, 18 comporte au moins un conduit 106, 108 dont une première extrémité débouche dans la chambre de pression avant 36, 40 et dont une seconde extrémité débouche dans la périphérie du piston 16, 18, de manière communiquer avec la chambre d'alimentation 34, 38 en position de repos du piston 16, 18 et de manière à communiquer avec la chambre de pression avant 36, 40 en position d'application du piston. De la sorte, en position de repos de chaque piston 16, 18, le conduit 106, 108 est agencé axialement au niveau de la chambre d'alimentation arrière 34, 38 et, dans la position avancée du piston 16, 18 (non représentée) le conduit 106, 108 est agencé axialement au niveau de la chambre de pression avant, c'est à dire de l'autre côté du moyen d'étanchéité avant 28, 26 par rapport à la position de repos du piston 16, 18, ce qui permet par conséquent d'isoler la chambre 36, 40 de pression avant associée et ainsi de permettre la montée en pression du fluide hydraulique.

Dans le mode de réalisation préféré de l'invention, et de manière non limitative de celle-ci, le moyen d'étanchéité avant 28, 26 est constitué d'un joint d'étanchéité avant 28, 26 qui est monté dans une gorge 110, 112 associée du corps 12.

Une lèvre périphérique intérieure du joint d'étanchéité avant 28, 26, agencée au contact du piston 16, 18, est susceptible de se soulever du piston 16, 18 lorsqu'il recule de sa position d'application vers sa position de repos. Cette configuration permet au fluide hydraulique, en passant entre l'alésage 14 et le piston 16, 18 de ré-alimenter le conduit radial 42, 48 d'alimentation du réservoir.

En effet, lorsque le conducteur relâche son effort sur l'extrémité 19 du piston primaire 16, les deux pistons 16 et 18 reculent rapidement et il se crée une dépression dans les chambres avant de pression primaire 36 et secondaire 40. Cette dépression est susceptible de soulever les lèvres des joints 26 et 28, ce qui permet au fluide hydraulique de cheminer de la chambre avant de pression 36, 40 vers le conduit 42,48, en circulant entre l'alésage 14 et la périphérie du piston 16, 18, et donc de ré-alimenter les conduits radiaux 42, 48 et les réservoirs associés.

Dans un maître-cylindre conventionnel, le piston 16, 18 est guidé directement dans l'alésage du corps, et le fluide hydraulique est susceptible, lors du recul du piston, de s'insinuer entre la périphérie du piston 16, 18 et l'alésage cylindrique 14.

La circulation du fluide est donc directement dépendante du jeu radial qui existe entre le piston 16, 18 et l'alésage cylindrique 14, ce jeu étant lui-même fonction de l'ajustement qu est réalisé entre le piston 16, 18 et l'alésage 14 lors des usinages respectifs du dit piston 16, 18 et de l'alésage 14.

Or, ce jeu radial est nécessairement réduit puisque l'alésage 14 doit être à même de fournir une guidage précis du piston 16, 18. De ce fait, ce jeu radial ne permet pas un cheminement satisfaisant du fluide hydraulique entre le piston 16, 18 et l'alésage 14.

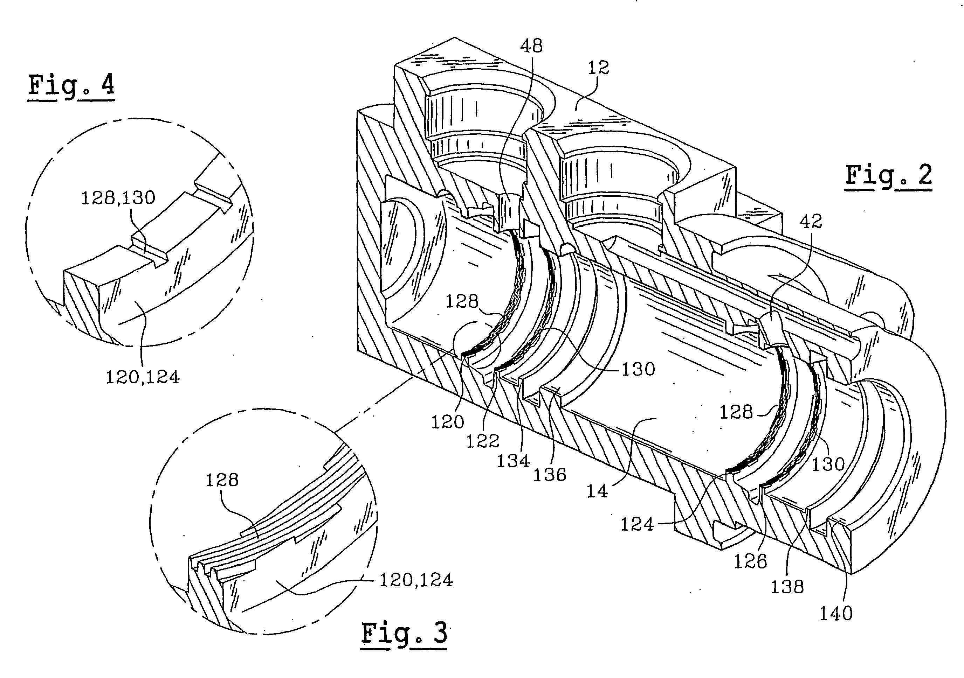

Comme l'illustrent plus particulièrement les figures 2 à 4, pour remédier à cet inconvénient, le maître-cylindre selon l'invention comporte un tronçon avant 120, 124 de guidage, qui est agencé en avant du moyen 26, 28 d'étanchéité avant, et qui comporte au moins une rainure 128 qui établit une communication entre la chambre avant 40, 36 et le moyen d'étanchéité avant 26, 28 pour permettre, lors du recul du piston 16, 18 vers sa position de repos, la réalimentation du conduit radial 42, 48 d'alimentation et du réservoir associé.

Cette configuration permet de ré-alimenter de façon satisfaisante le conduit radial 42, 48 indépendamment du jeu fonctionnel qui existe entre le piston 16, 18et l'alésage 14, et plus particulièrement entre le piston 16, 18 et le tronçon avant 120, 124 de guidage.

Avantageusement, l'alésage comporte au moins un tronçon arrière 122, 126 de guidage du piston 16, 18 qui est agencé entre le moyen d'étanchéité avant 26, 28 et le conduit 42, 48 radial d'alimentation et qui comporte au moins une rainure 130 analogue à (aux) rainure(s) 128 précédemment décrites, pour établir une communication entre le moyen d'étanchéité avant 26, 28 et le conduit radial 42, 48 afin de permettre, lors du recul du piston 16, 18 vers sa position de repos, la réalimentation du conduit radial 42, 48 d'alimentation et du réservoir.

Dans le mode de réalisation préféré de l'invention, les tronçons avant 120, 124 et arrière 122, 126 de guidage sont respectivement constitués de portées annulaires avant et arrière qui font saillie à l'intérieur de l'alésage 14 et qui sont chacune d'un diamètre intérieur "D" correspondant sensiblement à celui du piston 16, 18.

Par ailleurs, le corps comporte une paire arrière de portées annulaires 134, 136 qui sont agencées de part et d'autre d'un joint d'étanchéité arrière 30 formant le moyen d'étanchéité arrière associé au piston 18 et une paire arrière de portées annulaires 138, 140 qui sont agencées de part et d'autre d'un joint d'étanchéité arrière 32 formant le moyen d'étanchéité arrière associé au piston 16. Ces portées 134, 136, 138, 140 permettent le guidage des pistons 16, 18 associés dans l'alésage 14.

Cette configuration est particulièrement avantageuse puisqu'elle permet de limiter le contact du piston 16, 18 aux seules portées annulaires 120, 122, 124, 126, 134, 136, 138, 140, ce qui, d'une part, réduit considérablement les frottements du piston 16, 18 dans l'alésage 14 et, d'autre part, autorise la réalisation des usinages du piston 16, 18 et des portées 120, 122, 124, 126, 134, 136, 138, 140 selon des cotes de fabrication moins strictes que celles d'un maître-cylindre conventionnel, tout en proposant un guidage précis du piston 16, 18. Cette configuration permet de plus la réalimentation du conduit radial 42, 48 avec un débit satisfaisant.

Les rainures 128, 130 sont représentées plus particulièrement aux figures 3 et 4.

Selon un mode de réalisation préféré de l'invention, les rainures 128, 130 sont hélicoïdales, comme représenté aux figures 3 et 4.

Cette disposition n'est toutefois pas limitative de l'invention, et les rainures 128, 130 pourraient être sensiblement axiales, comme représenté à la figure 4.

Dans le mode de réalisation préféré de l'invention, chaque portée annulaire avant 120, 124 et/ou arrière 122, 126 comporte une pluralité de rainures associées 128, 130.

En particulier, dans le mode de réalisation préféré de l'invention qui est représenté à la figure 3, les rainures 128, 130 hélicoïdales sont toutes de même pas, de manière à favoriser une circulation tourbillonnaire du fluide hydraulique.

Dans le mode de réalisation en variante de l'invention qui est représenté à la figure 4, les rainures axiales 128, 130 sont agencées à intervalles angulaires réguliers sur la surface de la portée 120, 122, 124, 126 associée, de manière à proposer une circulation homogène du fluide hydraulique.

Enfin, comme l'illustre la figure 1, les moyens de butée des pistons 16, 18 comportent à l'extrémité de chaque piston 16, 18 un anneau élastique extérieur 142, 144 qui est susceptible, dans la position de repos du piston 16, 18, de venir au contact d'une face d'épaulement avant de la portée annulaire 124, 120 avant associée. Cette configuration permet donc avantageusement d'utiliser les portées annulaires avant 124, 120 pour réaliser des moyens de butée des pistons 16 et 18 qui sont simples et peu coûteux à fabriquer.

L'invention permet donc de disposer d'un maître-cylindre garantissant une réalimentation satisfaisante des conduits radiaux 42, 48 lors du recul des pistons 16, 18.

## Revendications

1. Maître-cylindre (10) de freinage pour un véhicule automobile, du type qui comporte un corps (12) sensiblement axial à l'intérieur d'un alésage (14) duquel est monté coulissant au moins un piston axial (16, 18), qui est susceptible d'être actionné par un conducteur du véhicule entre une position arrière de repos et une position avant d'application d'un effort de freinage, du type dans lequel l'alésage (14) comporte deux moyens d'étanchéité avant (26, 28) et arrière (30, 32) qui sont interposés entre le piston (16, 18) et l'alésage (14), le moyen d'étanchéité avant (26, 28) délimitant dans l'alésage (14) une chambre d'alimentation arrière (34, 38) et une chambre de pression avant (36, 40), du type dans lequel le corps (12) comporte un conduit radial (42, 48) d'alimentation qui relie un réservoir extérieur de fluide hydraulique à la chambre d'alimentation arrière (34, 38) et qui débouche entre les deux moyens d'étanchéité (26, 28, 30, 32) du type dans lequel le corps (12) comporte un perçage (50, 52) d'alimentation d'un circuit de freinage qui débouche dans la chambre de pression avant (36, 40), du type qui comporte des moyens (106, 108) de mise en communication de la chambre de pression avant (36, 40) et de la chambre d'alimentation arrière (34, 38) qui sont susceptibles d'être inhibés par le piston (16, 18) lorsqu'il est mû axialement vers l'avant vers sa position d'application pour isoler la chambre de pression avant (36, 40) de la chambre d'alimentation arrière (34, 38) et permettre ainsi l'établissement d'une pression de freinage dans la chambre de pression avant (36, 40), du type dans lequel le moyen d'étanchéité avant (26, 28) est susceptible de permettre le passage du fluide hydraulique lors du recul du piston (16, 18) vers sa position de repos,
**caractérisé en ce** l'alésage (14) comporte un tronçon avant (120, 124) de guidage du piston (16, 18), agencé en avant du moyen (26, 28) d'étanchéité avant, qui comporte au moins une rainure (128), qui établit une communication entre la chambre avant (36, 40) et le moyen (26, 28) d'étanchéité avant pour permettre, lors du recul du piston (16, 18) vers sa position de repos, la réalimentation du conduit radial (42, 48) d'alimentation et du réservoir.

2. Maître-cylindre (10) selon la revendication précédente, **caractérisé en ce que** l'alésage (14) comporte au moins un tronçon arrière (122, 126) de guidage du piston, qui est agencé entre le moyen (26, 28) d'étanchéité avant et le conduit (42, 48) radial d'alimentation, et qui comporte au moins une rainure (130) qui établit une communication entre le moyen (26, 28) d'étanchéité avant et le conduit radial (42, 48) pour permettre, lors du recul du piston (16, 18) vers sa position de repos, la réalimentation du conduit radial (42, 48) d'alimentation et du réservoir.

3. Maître-cylindre (10) selon la revendication précédente, **caractérisé en ce que** les rainures (128, 130) sont hélicoïdales.

4. Maître-cylindre selon l'une quelconque des revendications 2 ou 3 **caractérisé en ce que** chaque tronçon avant (120, 124) et/ou arrière (122, 126) comporte une pluralité de rainures (128, 130).

5. Maître-cylindre (10) selon l'une quelconque des revendication 2 à 4, **caractérisé en ce que** les tronçons avant (120, 124) et arrière (122, 126) de guidage sont respectivement constitués de portées annulaires avant (120, 124) et arrière (122, 126) qui font saillie à l'intérieur de l'alésage (14) et qui sont chacune d'un diamètre (D) intérieur correspondant sensiblement à celui du piston (16, 18).

6. Maître-cylindre (10) selon l'une quelconque des revendications précédentes, **caractérisé en ce que** le moyen d'étanchéité avant est constitué d'un joint d'étanchéité avant (26, 28) qui est monté dans une gorge (110, 112) du corps (12) et dont une lèvre périphérique intérieure, agencée au contact du piston (16, 18), est susceptible de se soulever du piston (16, 18) lorsqu'il revient de sa position d'application vers sa position de repos pour permettre au fluide hydraulique, en circulant entre l'alésage (14) et le piston (16, 18) de ré-alimenter le conduit radial (42, 48) d'alimentation et le réservoir.

7. Maître-cylindre (10) selon l'une quelconque des revendications 2 à 12, **caractérisé en ce que** le piston (16, 18) comporte à son extrémité un anneau élastique extérieur (142, 144) qui est susceptible, dans la position de repos du piston (16, 18), de venir au contact d'une face d'épaulement avant de la portée annulaire avant (120, 124) pour former butée.

8. Maître-cylindre (10) selon l'une quelconque des revendications précédentes, **caractérisé en ce que** le piston (16, 18) est rappelé élastiquement vers sa position arrière de repos par un ressort (20, 24).

9. Maître-cylindre (10) selon l'une quelconque des revendications précédentes, **caractérisé en ce qu'**il est un maître-cylindre de type "tandem" qui comporte, d'arrière en avant, deux pistons primaire (16), 18) et secondaire qui délimitent dans l'alésage du corps des chambres d'alimentation primaire (34) et secondaire (38) et des chambres de pression primaire (36) et secondaire (40), le piston primaire (16) étant rappelé élastiquement vers sa position arrière de repos par l'intermédiaire d'un ressort (24) prenant appui entre une face arrière (25) du piston secondaire (18) et une face avant (29) du piston primaire (16).

## Claims

1. Brake master cylinder (10) for a motor vehicle, of the type which comprises a practically axial body (12) inside a bore (14) of which is slidably mounted at least one axial piston (16, 18) which can be actuated by a driver of the vehicle between a rear position of rest and a forward position of applying a braking force, of the type in which the bore (14) comprises two sealing means, front (26, 28) and rear (30, 32), which are interposed between the piston (16, 18) and the bore (14), the front sealing means (26, 28) delimiting within the bore (14) a rear supply chamber (34, 38) and a front pressure chamber (36, 40), of the type in which the body (12) comprises a radial supply duct (42, 48) which connects an external reservoir of hydraulic fluid to the rear supply chamber (34, 38) and which opens between the two sealing means (26, 28, 30, 32) of the type in which the body (12) comprises a supply drilling (50, 52) for a braking circuit which opens into the front pressure chamber (36, 40), of the type which comprises means (106, 108) placing the front pressure chamber (36, 40) and the rear supply chamber (34, 38) in communication, which means are able to be inhibited by the piston (16, 18) when it is moved axially forwards towards its position of application so as to isolate the front pressure chamber (36, 40) from the rear supply chamber (34, 38) and thus make it possible for a braking pressure to be established in the front pressure chamber (36, 40), of the type in which the front sealing means (26, 28) is able to allow hydraulic fluid to pass as the piston (16, 18) retreats towards its position of rest,
**characterized in that** the bore (14) comprises a front portion (120, 124) for guiding the piston (16, 18), arranged forward of the front sealing means (26, 28) which comprises at least one groove (128) which establishes communication between the front chamber (36, 40) and the front sealing means (26, 28) so as to allow, as the piston (16, 18) retreats towards its position of rest, the resupply of the radial supply duct (42, 48) and of the reservoir.

2. Master cylinder (10) according to the preceding claim, **characterized in that** the bore (14) comprises at least one rear portion (122, 126) for guiding the piston, which is arranged between the front sealing means (26, 28) and the radial supply duct (42, 48), and which comprises at least one groove (130) which establishes communication between the front sealing means (26, 28) and the radial duct (42, 48) so as to allow, as the piston (16, 18) retreats towards its position of rest, the resupply of the radial supply duct (42, 48) and of the reservoir.

3. Master cylinder (10) according to the preceding Claim, **characterized in that** the grooves (128, 130) are helical.

4. Master cylinder according to either one of Claims 2 and 3, **characterized in that** each portion, front (120, 124) and/or rear (122, 126), comprises a number of grooves (128, 130).

5. Master cylinder (10) according to any one of Claims 2 to 4, **characterized in that** the front (120, 124) and rear (122, 126) guide portions consist respectively of front (120, 124) and rear (122, 126) annular bearing surfaces which project into the bore (14) and each of which has an inside diameter (D) practically corresponding to that of the piston (16, 18).

6. Master cylinder (10) according to any one of the preceding claims, **characterized in that** the front sealing means consist of a front seal (26, 28) which is mounted in a groove (110, 112) of the body (12) and an interior peripheral lip of which, arranged in contact with the piston (16, 18), is able to lift the piston (16, 18) when it returns from its position of application to its position of rest, so as to allow the hydraulic fluid, by flowing between the bore (14) and the piston (16, 18), to resupply the radial supply duct (42, 48) and the reservoir.

7. Master cylinder (10) according to any one of Claims 2 to 12 [sic], **characterized in that** the piston (16, 18) comprises, at its end, an external elastic ring (142, 144) which is capable, when the piston (16, 18) is in the position of rest, of coming into contact with a front shoulder face of the front annular bearing surface (120, 124) to form an end stop.

8. Master cylinder (10) according to any one of the preceding claims, **characterized in that** the piston (16, 18) is returned elastically to its rear position of rest by a spring (20, 24).

9. Master cylinder (10) according to any one of the preceding claims, **characterized in that** it is a master cylinder of the "tandem" type which comprises, from the rear forwards, two pistons, primary (16), 18) and secondary, which delimit, within the bore of the body, a primary (34) and a secondary (38) supply chamber, and a primary (36) and a secondary (40) pressure chamber, the primary piston (16) being returned elastically to its rear position of rest by a spring (24) bearing between a rear face (25) of the secondary piston (18) and a front face (29) of the primary piston (16).

## Patentansprüche

1. Hauptbremszylinder (10) für ein Kraftfahrzeug, vom Typ, der einen im Wesentlichen axialen Körper (12) mit einer Bohrung (14) aufweist, in der ein axialer Kolben (16, 18) gleitend angebracht ist, welcher von einem Fahrer des Fahrzeugs zwischen einer hinteren Ruhestellung und einer vorderen Stellung zum Aufbringen einer Bremskraft betätigt werden kann, vom Typ, bei dem die Bohrung (14) zwei Dichtmittel, ein vorderes (26, 28) und ein hinteres (30, 32), aufweist, die zwischen dem Kolben (16, 18) und der Bohrung (14) eingesetzt sind, wobei das vordere Dichtmittel (26, 28) in der Bohrung (14) eine hintere Versorgungskammer (34, 38) und eine vordere Druckkammer (36, 40) begrenzt, vom Typ, bei dem der Körper (12) eine radiale Versorgungsleitung (42, 48) aufweist, die einen äußeren Hydraulikfluidbehälter mit der hinteren Versorgungskammer (34, 38) verbindet und zwischen die beiden Dichtmitteln (26, 28, 30, 32) mündet, vom Typ, bei dem der Körper (12) eine Durchbohrung (50, 52) zur Versorgung eines Bremskreises aufweist, die in die vordere Druckkammer (36, 40) mündet, vom Typ, der Mittel (106, 108) zum Verbinden der vorderen Druckkammer (36, 40) mit der hinteren Versorgungskammer (34, 38 aufweist, welche durch den Kolben (16, 18) gesperrt werden können, wenn dieser axial nach vorne in seine Anlagestellung bewegt wird, um die vordere Druckkammer (36, 40) von der hinteren Versorgungskammer (34, 38) zu isolieren und somit den Aufbau eines Bremsdruck in der vorderen Druckkammer (36, 40) zu ermöglichen, vom Typ, bei dem das vordere Dichtmittel (26, 28) das Durchströmen des Hydraulikfluids beim Rücklauf des Kolbens (16, 18) in seine Ruhestellung ermöglicht,
**dadurch gekennzeichnet, dass** die Bohrung (14) einen vorderen Abschnitt (120, 124) zum Führen des Kolbens (16, 18) aufweist, der vor dem vorderen Dichtmittel (26, 28) angeordnet ist und mindestens eine Rille (128) aufweist, welche eine Verbindung zwischen der vorderen Kammer (36, 40) und dem vorderen Dichtmittel (26, 28) herstellt, um beim Rücklauf des Kolbens (16, 18) in seine Ruhestellung die erneute Versorgung der radialen Versorgungsleitung (42, 48) und des Behälters zu ermöglichen.

2. Hauptzylinder (10) nach dem vorhergehenden Anspruch, **dadurch gekennzeichnet, dass** die Bohrung (14) mindestens einen hinteren Abschnitt (122, 126) zum Führen des Kolbens aufweist, welcher zwischen dem vorderen Dichtmittel (26, 28) und der radialen Versorgungsleitung (42, 48) angeordnet ist und mindestens eine Rille (130) aufweist, die eine Verbindung zwischen dem vorderen Dichtmittel (26, 28) und der radialen Leitung (42, 48) herstellt, um beim Rücklauf des Kolbens (16, 18) in seine Ruhestellung die erneute Versorgung der radialen Versorgungsleitung (42, 48) und des Behälters zu ermöglichen.

3. Hauptzylinder (1**0**) nach dem vorhergehenden Anspruch, **dadurch gekennzeichnet, dass** die Rillen (128, 130) spiralförmig sind.

4. Hauptzylinder (10) nach einem der Ansprüche 2 oder 3, **dadurch gekennzeichnet, dass** jeder vordere (120, 124) und/oder hintere Abschnitt (122, 126) eine Vielzahl von Rillen (128, 130) aufweist.

5. Hauptzylinder (10) nach einem der Ansprüche 2 bis 4, **dadurch gekennzeichnet, dass** die vorderen (120, 124) und hinteren Führungsabschnitte (122, 126) jeweils aus vorderen (120, 124) und hinteren ringförmigen Vorsprüngen (122, 126) gebildet sind, die in die Bohrung (14) hineinragen und jeweils einen Innendurchmesser (D) aufweisen, der im Wesentlichen demjenigen des Kolbens (16, 18) entspricht.

6. Hauptzylinder (10) nach einem der vorhergehenden Ansprüche, **dadurch gekennzeichnet, dass** das vordere Dichtmittel aus einer vorderen Dichtung (26, 28) gebildet ist, die in einer Nut (110, 112) des Körpers (12) angebracht ist und von welcher eine umlaufende Innenlippe, die in Kontakt mit dem Kolben (16, 18) angeordnet ist, sich vom Kolben (16, 18) abheben kann, wenn dieser von seiner Anlagestellung in seine Ruhestellung zurückläuft, um dem Hydraulikfluid durch Zirkulieren zwischen der Bohrung (14) und dem Kolben (16, 18) zu ermöglichen, die radiale Versorgungsleitung (42, 48) und den Behälter erneut zu versorgen.

7. Hauptzylinder (10) nach einem der Ansprüche 2 bis 12, **dadurch gekennzeichnet, dass** der Kolben (16, 18) an seinem Ende einen elastischen Außenring (142, 144) aufweist, der in der Ruhestellung des Kolbens (16, 18) mit einer vorderen Schulterfläche des vorderen ringförmigen Vorsprungs (120, 124) in Kontakt kommen kann, um einen Anschlag zu bilden.

8. Hauptzylinder (10) nach einem der vorhergehenden Ansprüche, **dadurch gekennzeichnet, dass** der Kolben (16, 18) in seine hintere Ruhestellung durch eine Feder (20, 24) elastisch zurückgestellt wird.

9. Hauptzylinder (10) nach einem der vorhergehenden Ansprüche, **dadurch gekennzeichnet, dass** er ein Hauptzylinder vom Typ "Tandem" ist, der von hinten nach vorne einen Primärkolben (16) und einen Sekundärkolben (18) aufweist, die in der Bohrung des Körpers eine primäre (34) und sekundäre Versorgungskammer (38) und eine primäre (36) und sekundäre Druckkammer (40) begrenzen, wobei der Primärkolben (16) in seine hintere Ruhestellung durch eine Feder (24) elastisch zurückgestellt wird, welche sich zwischen einer hinteren Fläche (25) des Sekundärkolbens (18) und einer vorderen Fläche (29) des Primärkolbens (16) abstützt.
